# EUROPÄISCHE PATENTANMELDUNG

(11) **EP 4 799 791 A1**
(43) Veröffentlichungstag der Anmeldung: **02.09.2026**
(21) Anmeldenummer: 25160853.5
(22) Anmeldetag: 28.02.2025
(51) Int. Cl.: B29C 48/76, B29C 48/693, B29C 48/80, B29C 48/275, B29C 48/29, B29C 48/285, B29B 7/42, B29B 7/66, C08J 11/04, C08J 11/24

(54) **EXTRUDER UND RECYCLINGVERFAHREN**

(71) Anmelder: RAMPF Advanced Polymers GmbH & Co. KG, 72661 Grafenberg (DE)
(72) Erfinder: Kugler, Michael, 66954 Pirmasens (DE)
(74) Vertreter: Weickmann & Weickmann PartmbB

(57) **Zusammenfassung**

Die vorliegende Erfindung ist auf einen Extruder und dessen Verwendung in einem Verfahren zur kontinuierlichen Solvolyse von Polymerabfällen gerichtet.

## Beschreibung

Die vorliegende Erfindung ist auf einen Extruder und dessen Verwendung in einem Verfahren zur kontinuierlichen Solvolyse von Polymerabfällen gerichtet.

Kunststoffrecycling spielt eine entscheidende Rolle im Umgang mit der globalen Kunststoffverschmutzung und für die nachhaltige Nutzung von Ressourcen. Kunststoffe sind aus unserem Alltag nicht mehr wegzudenken, verursachen jedoch erhebliche Umweltprobleme, wenn sie unsachgemäß entsorgt werden. Recycling bietet eine Möglichkeit, Kunststoffabfälle wiederzuverwerten, natürliche Ressourcen zu schonen und die CO₂ Emissionen zu reduzieren. Dabei gibt es verschiedene Recyclingverfahren, die je nach Kunststoffart und Verunreinigungsgrad angewendet werden. Trotz technischer Fortschritte sind die Anforderungen an die bekannten Recyclingprozesse bezüglich Sortenreinheit, Energieverbrauch, Rentabilität, etc. immer noch herausfordernd.

Einige Kunststoffe lassen sich besser recyceln als andere, vor allem wenn sie sortenrein gesammelt und verarbeitet werden. Die höchste Recyclingquote wird in Deutschland bei Polyethylenterephthalat (Getränkeflaschen, Fasern), Polyethylen, Polypropylen und Polystyrol erreicht. Vernetzte Kunststoffe (Duroplaste) sind dagegen schwieriger zu recyclen, da sie chemisch sehr stabil und oft mit Additiven versetzt sind. Duroplaste werden üblicherweise thermisch verwertet.

Polyurethane (PU) sind vielseitige Kunststoffe, die beispielsweise als Weichschaum in Matratzen, Polstermöbel, oder Autositzen, und als Hartschaum in Dämmstoffpanelen oder Kühlmöbeln eingesetzt werden. Polyurethan kann entweder als unvernetzter Thermoplast (TPU) oder als vernetztes (duroplastisches) Polymer in Form von Gießharz, Weich- oder Hartschaum vorliegen.

Aufgrund ihrer komplexen chemischen Struktur und der Vielfalt an Einsatzbereichen gestaltet sich das Recycling von Polyurethanen jedoch besonders schwierig. Hinzu kommt, dass Polyurethane aufgrund der verschiedenen Anforderungsprofile häufig mit Füllstoffen (z.B. anorganische Füllstoffe) modifiziert sind oder mit anderen Polymermaterialien (z.B. Sitzbezüge, Kühlschrankgehäuse, etc.) verklebt werden. Derart verunreinigte Polymermaterialien wurden bisher üblicherweise deponiert oder im besten Fall in der Müllverbrennungsanlage thermisch verwertet.

In Deutschland sind 2021 etwa 1 Million Tonnen Polyurethan und Mischkunststoff entsorgt worden. Während beim Weichschaum üblicherweise Mischkunststoffe aus Polyolefin/Polyurethan bzw. Polyester/Polyurethan anfallen, ist beim Hartschaum das Polyurethan meist mit konstruktiven Polymeren wie z.B. Polystyrol verunreinigt (Kühlmöbel).

Bekannt ist der Abbau von Kunststoffen und Kunststoffabfällen wie z.B. Polyurethan mittels Solvolyse (wie z.B. Glykolyse, Alkoholyse, Acidolyse, Aminolyse und Hydrolyse) unter Zusatz von niedermolekularen Spaltreagenzien wie Glykolen, Alkoholen, Säuren, Aminen bzw. Wasser. Die Spaltreagenzien werden dabei in der Regel im Überschuss eingesetzt, um eine möglichst quantitative Umsetzung zu erhalten. Das dabei entstehende Solvolyseprodukt ist ein Gemisch aus unterschiedlichen niedermolekularen Kunststoffabbauprodukten und enthält ferner nicht umgesetzte Spaltreagenzien.

Das Solvolyseprodukt kann direkt als Ausgangsmaterial für die Herstellung neuer Kunststoffe eingesetzt werden. Üblicherweise wird das Solvolyseprodukt allerdings zunächst aufgereinigt, z.B. durch Abdestillieren des überschüssigen Spaltreagenz.

Es besteht dringender Bedarf, das Recycling von Kunststoffen und insbesondere Kunststoffgemischen zu verbessern oder gar zu ermöglichen. Eine Verbesserung kann sich beispielsweise in der Qualität der Recyclingprodukte, dem Recycling-Durchsatz, der Energieeffizienz u.s.w. zeigen. Besonderes Augenmerk liegt dabei auf Prozessen mit denen auch Kunststoffgemische erstmalig kontinuierlich (stofflich) aufgearbeitet werden können.

Es wurde überraschenderweise gefunden, dass mit dem erfindungsgemäßen Extruder sowie dem damit durchgeführten Verfahren nicht nur sortenreine Kunststoffe, sondern auch Kunststoffgemische kontinuierlich stofflich recycliert werden können.

In einem Aspekt betrifft die vorliegende Erfindung daher einen Extruder umfassend
(i) einen beheizbaren Hohlzylinder;
(ii) mindestens eine Schnecke, welche drehbar im Hohlraum des beheizbaren Hohlzylinders angeordnet ist und sich im Wesentlichen über die gesamte Länge des beheizbaren Hohlzylinders erstreckt;
(iii) ein Antriebsmittel für die Drehung der Schnecke an einem Ende des beheizbaren Hohlzylinders;
(iv) eine Einlassöffnung (A) im Bereich des dem Antriebsmittel zugewandten Endes des beheizbaren Hohlzylinders;
(v) eine Austrittsdüse an dem dem Antriebsmittel abgewandten Ende des beheizbaren Hohlzylinders;
(vi) eine Einlassöffnung (B), angeordnet zwischen Einlassöffnung (A) und Austrittsdüse;
(vii) ggf. eine Entgasungsöffnung angeordnet zwischen Einlassöffnung (B) und Austrittsdüse; und
(viii) ggf. ein Siebrohr, das fluiddicht mit der Austrittsdüse verbunden ist,
wobei der beheizbare Hohlzylinder in einem vorbestimmten Zylinderabschnitt angrenzend an die Austrittsdüse mit mindestens einer Öffnung, insbesondere mindestens einer Bohrung oder mindestens einem Spalt, versehen ist.

Der Hohlzylinder (gleichbedeutend mit Schneckenzylinder) kann aus einem Stück gefertigt oder aus einzelnen Teilstücken aufgebaut sein. Der Hohlzylinder besteht üblicherweise aus Stahl. Bevorzugt ist der Hohlzylinder in vorbestimmten Abschnitten beheizbar und/oder kühlbar. Der Hohlzylinder ist bevorzugt derart konfiguriert, dass die Temperatur im Hohlraum im beheizten Bereich bevorzugt auf 100-350 °C eingestellt werden kann. Sofern der Hohlzylinder auch kühlbar ist, ist dieser derart konfiguriert, dass im jeweiligen Abschnitt die Temperatur im Hohlraum auf 10-80 °C eingestellt werden kann. Die Kühlung oder Heizung erfolgt über entsprechende Kanäle, die in die Zylinderwand eingearbeitet sind und von Kühl- oder Heizmedien durchflossen werden können.

Der Hohlzylinder weist einen Hohlraum auf, der an die jeweils verwendete(n) Schnecke(n) angepasst ist. In den Hohlraum des Hohlzylinders können ein oder mehrere Schnecke(n) angeordnet werden. Je nach Anzahl der unterzubringenden Schnecken hat der Hohlraum in dem beheizbaren Hohlzylinder einen kreisförmigen (eine Schnecke), einen 8-förmigen (Doppelschnecke) oder kleeblattförmigen Querschnitt (drei Schnecken). Es muss sichergestellt werden, dass die Schnecken im Hohlraum des Hohlzylinders kontinuierlich drehbar sind.

Die Schnecke kann in verschiedene Abschnitte unterteilt sein. Insbesondere unterscheiden sich die jeweiligen Abschnitte der Schnecke in ihrer Konfiguration, z.B. in der Gewindesteigung, Anzahl der oder Anwesenheit von Knetelementen, Entgasungselementen und Verdichtungselementen.

Die Schnecke(n) erstreckt sich im Wesentlichen über die Gesamtlänge des beheizbaren Hohlzylinders.

Der Ausdruck *"im Wesentlichen"* im Sinne der vorliegenden Erfindung bezieht sich typischerweise auf Werte von mindestens 90 %, stärker bevorzugt mindestens 95 %, noch stärker bevorzugt mindestens 99 %.

Bevorzugt ist der beheizbare Hohlzylinder für zwei Schnecken, insbesondere parallel angeordnete Schnecken, konzipiert. Derartige Doppelschneckenextruder sind dem Fachmann bekannt.

Entsprechende Antriebsmittel sind dem Fachmann auf dem Gebiet der Extrusion bekannt. Das Antriebsmittel befindet sich an einem Ende des beheizbaren Hohlyzlinders.

Der Extruder umfasst ferner eine Einlassöffnung (A) im Bereich des dem Antriebsmittels zugewandten Endes des beheizbaren Hohlzylinders. Die Einlassöffnung (A) erstreckt sich bevorzugt in den Hohlraum des beheizbaren Hohlzylinders. Die Einlassöffnung (A) kann ferner auch einen Befülltrichter umfassen. Über die Einlassöffnung (A) kann beispielsweise der Polymerabfall in den Extruder eingeführt werden.

Eine zusätzliche Einlassöffnung (B) kann sich in den Hohlraum des beheizbaren Hohlzylinders erstrecken. Die Einlassöffnung (B) ist bevorzugt zwischen Einlassöffnung (A) und Austrittsdüse angeordnet. Die Einlassöffnung (B) ist bevorzugt ausgelegt, um Flüssigkeiten in den Extruder einzuspeisen.

Ferner kann am beheizbaren Hohlzylinder bevorzugt zwischen Einlassöffnung (B) und Austrittsdüse eine Entgasungsöffnung angeordnet sein, die bevorzugt fluiddicht verschließbar ist.

Erfindungsgemäß umfasst der beheizbare Hohlzylinder in einem vorbestimmten Zylinderabschnitt angrenzend an die Austrittsdüse mindestens eine Öffnung, insbesondere mindestens eine Bohrung oder mindestens einen Spalt. Die mindestens eine Öffnung ist bevorzugt radial angeordnet. Bevorzugt ist die Öffnung zwischen Hohlzylindermantelfläche und Hohlraum des Hohlzylinders für Fluide, insbesondere Flüssigkeiten, durchgängig.

Die Öffnung hat bevorzugt eine Querschnittsfläche im Bereich von 0,01-200 mm². Beispielsweise kann die mindestens eine Öffnung eine Bohrung sein. Bevorzugt ist der Durchmesser der Bohrung im Bereich von 0,0005-10 mm, stärker bevorzugt 0,0005-1 mm. Die Öffnungen sind bevorzugt regelmäßig über die gesamte Hohlzylindermantelfläche des vorbestimmten Zylinderabschnitts angeordnet. Der vorbestimmte Zylinderabschnitt macht bevorzugt etwa 1-60 %, stärker bevorzugt 10-50% der Gesamtlänge des beheizbaren Hohlzylinders aus.

Bevorzugt ist die Schneckenkonfiguration in dem vorbestimmten Zylinderabschnitt mit mindestens einer Öffnung so konfiguriert, dass in dem Abschnitt ein Druck von 0-30 bar, stärker bevorzugt 2-20 bar aufgebaut werden kann.

Der erfindungsgemäße Extruder kann ferner ein Siebrohr umfassen, das fluiddicht mit der Austrittsdüse verbunden ist. Das Siebrohr ist bevorzugt aus Metall und weist bevorzugt mindestens eine Öffnung auf. Die Öffnung(en) des Siebrohrs entspricht/entsprechen bevorzugt der/den oben für den vorbestimmten Zylinderabschnitt beschriebenen Öffnung(en).

Bevorzugt ist das Siebrohr beheizbar, z.B. in einem Bereich von 100-350 °C. Das Siebrohr kann ferner mit Druck beaufschlagbar sein, insbesondere mit 0-30 bar, stärker bevorzugt 1-20 bar, noch stärker bevorzugt 1,2-20 bar. Das Siebrohr hat bevorzugt eine Wandstärke von 1-10 mm. Das Siebrohr kann ferner zu 10-80 % bezogen auf die Gesamtaußenfläche des Siebrohrs perforiert sein.

Ein weiterer Aspekt der vorliegenden Erfindung betrifft ferner ein Verfahren zur kontinuierlichen Solvolyse von Polymerabfällen in dem erfindungsgemäßen Extruder umfassend die Schritte
(a) Einbringen von Polymerabfall in den Hohlraum des beheizbaren Hohlzylinders über die Einlassöffnung (A),
(b) Einbringen des Spaltreagenz in den Hohlraum des beheizbaren Hohlzylinders über Einlassöffnung (A) und/oder (B),
(c) Extrudieren der in den Hohlraum des beheizbaren Hohlzylinders eingebrachten Komponenten, ggf. bei erhöhter Temperatur und/oder erhöhtem Druck.

Die Solvolyse im erfindungsgemäßen Verfahren findet, bevorzugt vollständig, während des Extrusionsprozesses im Extruder statt. Bevorzugt ist die Solvolyse eine Glykolyse, Hydrolyse, Alkoholyse, Aminolyse, Acidolyse oder eine Kombination davon, insbesondere bevorzugt eine Glykolyse.

Bei der Solvolyse wird das Polymer durch Zugabe von Spaltreagenz wie Glykol bei der Glykolyse, Alkohol bei der Alkoholyse, Säure bei der Acidolyse, Amin bei der Aminolyse oder Wasser bei der Hydrolyse abgebaut, wobei wieder die entsprechenden Monomere(-Derivate) sowie Oligomere(-Derivate) entstehen, aus denen die Polymerabfälle hergestellt wurden.

Der Polymerabfall umfasst einen solvolysierbaren Kunststoff. Der solvolysierbare Kunststoff ist bevorzugt ausgewählt aus der Gruppe bestehend aus Estergruppen-, Amidgruppen- und/oder Urethangruppen-haltigem Polymer, bevorzugt Polyurethan, Polyester, Polyetherester, Polyamid, Polycarbonat, Polyisocyanurat oder einer Mischung davon. Stärker bevorzugt ist der solvolysierbare Kunststoff ausgewählt aus Polyurethan und/oder Polyester, noch stärker bevorzugt Polyurethan, am meisten bevorzugt Polyesterpolyurethan und/oder Polyetherpolyurethan.

Der Polymerabfall kann neben dem solvolysierbaren Kunststoff ferner mindestens einen nicht-solvolysierbaren Kunststoff, insbesondere einen nicht-solvolysierbaren Thermoplast, enthalten. Beispiele für nicht-solvolysierbare Kunststoffe sind insbesondere Polyolefine, wie z.B. Polypropylen, Polyethylen und Polystyrol, bevorzugt Polystyrol.

Besonders bevorzugt enthält der Polymerabfall, der in den Hohlraum des beheizbaren Hohlzylinders eingebracht wird, eine Mischung aus mindestens einem Polyurethan und einem Polyolefin, insbesondere Polystyrol.

Erfindungsgemäß enthält der Polymerabfall 1-99,9 Gew.-% solvolysierbaren Kunststoff, insbesondere Polyurethan, und 0,1-99 Gew.-% Polyolefin, insbesondere Polystyrol.

Der Polymerabfall kann ferner mindestens einen Feststoff enthalten, der bei den Extrusionsbedingungen im festen Zustand vorliegt. Der Feststoff ist bevorzugt ausgewählt aus Aluminium, Papier und anorganischem Füllstoff, wie beispielsweise Titandioxid, oder Talk.

Im Schritt (b) wird das Spaltreagenz in den Hohlraum des beheizbaren Hohlzylinders über Einlassöffnung (A) und/oder (B) eingebracht.

In einer Ausführungsform, insbesondere bei der Aminolyse, ist das Spaltreagenz mindestens ein Polyamin, insbesondere mindestens ein Diamin, wie zum Beispiel Ethandiamin, Propandiamin, Butandiamin und/oder Hexandiamin, und/oder ein Triamin, wie zum Beispiel Ethantriamin, Propantriamin, Butantriamin, Pentantriamin und/oder Hexantriamin, und/oder Hydroxylamine wie z.B. Ethanolamin, bevorzugt ein Diamin.

In einer bevorzugten Ausführungsform, insbesondere bei der Alkoholyse oder Glykolyse, ist das Spaltreagenz ausgewählt aus mindestens einem Monoalkohol, insbesondere Methanol, Ethanol, Propanol, Butanol, Pentanol und/oder Hexanol, einem Diol, insbesondere Ethylenglykol, Diethylenglykol, Polyethylenglykol, Propylenglykol, Dipropylenglykol, Polypropylenglykol, Butandiol, Pentandiol und/oder Hexandiol, einem Triol, insbesondere Glycerin und/oder Trimethylolpropan, und einem Tetrol, insbesondere Pentaaerythrol, und Hydroxycarbonsäuren, insbesondere Rizinolsäure und Milchsäure.

In einer bevorzugten Ausführungsform, insbesondere bei der Acidolyse ist das Spaltreagenz ausgewählt aus mindestens einer Polycarbonsäure, insbesondere einer Dicarbonsäure, wie zum Beispiel Bernsteinsäure, Glutarsäure, Adipinsäure, Hexandicarbonsäure, Heptandicarbonsäure, Azealinsäure, Sebacinsäure, Decandicarbonsäure, Dodecandicarbonsäure und/oder Phthalsäure, und/oder einer Tricarbonsäure, wie zum Beispiel Trimelittsäure, und/oder mindestens einem Polycarbonsäureanhydrid, insbesondere einem Dicarbonsäureanhydrid, wie zum Beispiel Bernsteinsäure-, Glutarsäure-, Adipinsäure-, Hexandicarbonsäure-, Azealinsäure- und/oder Phthalsäureanhydrid, und/oder einem Tricarbonsäureanhydrid, wie zum Beispiel Trimelittsäureanhydrid, besonders bevorzugt aus mindestens einer Polycarbonsäure, stärker bevorzugt mindestens einer Dicarbonsäure.

Eine Hydrolyse wird unter Verwendung von Wasser als Spaltreagenz durchgeführt.

Das Spaltreagenz kann ferner mindestens einen Hilfsstoff, beispielsweise einen Katalysator zum Abbau von Kunststoffen, insbesondere einen basischen und/oder metallorganischen Katalysator, enthalten.

Der mindestens eine basische Katalysator kann ausgewählt sein aus der Gruppe bestehend aus Alkalimetallalkoholat, insbesondere Natriummethanolat, Kaliummethanolat, Natriumethanolat, Kaliumethanolat, Natriumpropanolat, Kaliumpropanolat, Natriumbutanolat und/oder Kaliumbutanolat, Alkalimetallhydroxid, insbesondere Natriumhydroxid und/oder Kaliumhydroxid, Alkalimetallcarbonat, insbesondere Natriumcarbonat und Kaliumcarbonat und Alkalimetallacetat, insbesondere Natriumacetat und Kaliumacetat.

Der mindestens eine metallorganische Katalysator kann ausgewählt sein aus der Gruppe bestehend aus Zink-Acetat, Magnesium-Acetat, Cobalt-Acetat, Zinn-Octoat, Dibutylzinndilaurat, Titantetraisopropanolat und Titantetrabutanolat. Ein Metallkatalysator wie Tetrabutyltitanat liegt insbesondere vor, wenn das Spaltreagenz ein Glykol, wie Diethylenglykol, ist.

Der Gehalt an Katalysator kann beispielsweise mehr als 0 und bis zu 10 Gew.%, bevorzugt 0,1-5 Gew.%, insbesondere 0,5-3 Gew.%, bezogen auf das Gesamtgewicht des Polymerabfalls betragen.

Im Schritt (c) wird der Polymerabfall zusammen mit dem Spaltreagenz extrudiert, dabei wird die Mischung bevorzugt bei erhöhter Temperatur und/oder erhöhtem Druck behandelt. Der beheizbare Hohlzylinder kann beispielsweise unterschiedliche Temperaturabschnitte aufweisen. Zusätzlich können im beheizbaren Hohlzylinder unterschiedliche Druckabschnitte vorliegen. Der Druck auf die im Extruderabschnitt befindliche Mischung kann über die Schneckengeometrie eingestellt werden.

Zusätzlich können im beheizbaren Hohlzylinder unterschiedliche Mischbereiche/Knetabschnitte vorliegen. Eine gute Durchmischung innerhalb des Extruders kann durch die Schneckengeometrie beispielsweise durch Knetelemente erreicht werden. Innerhalb der Knetabschnitte kann eine Temperatur von 100-350°C, bevorzugt 220-290°C, herrschen.

An der Einlassöffnung (A) umfasst die Schnecke bevorzugt Förderelemente, die den Polymerabfall Richtung Austrittsdüse abführen. Sobald das Spaltreagenz in den Extruder eingebracht wird, wird die Mischung bevorzugt in Knetabschnitten bevorzugt bei Temperaturen von 100-350°C, stärker bevorzugt 220-290°C behandelt.

Bevorzugt erfolgt die Behandlung der Mischung in den Knetabschnitten über 1-180 Minuten, stärker bevorzugt 3-120 Minuten.

Bevorzugt wird im Bereich des vorbestimmten Zylinderabschnitts angrenzend an die Austrittsdüse die Schneckengeometrie so gewählt, dass sie die Mischung verdichtet. Dadurch können Drücke auf die Innenfläche des Zylinderhohlraums von 1-80 MPa, bevorzugt 1,2-80 MPa eingestellt werden. Dem Fachmann ist es ohne Weiteres möglich, die Schneckenkonfiguration und das Temperatur- und Druckprofil innerhalb des Hohlzylinders derart anzupassen, dass die Solvolysereaktion im vorbestimmten Zylinderabschnitt angrenzend an der Austrittsdüse im Wesentlichen abgeschlossen ist. Das unter den Reaktionsbedingungen flüssige Solvolyseprodukt kann über die mindestens eine Öffnung im vorbestimmten Zylinderabschnitt ausgetragen werden.

Der nicht-solvolysierbare Kunststoff und/oder im Polymerabfall enthaltene Feststoff wird über die Austrittsdüse ausgetragen. Der Austrag über die Austrittsdüse enthält bevorzugt weniger als 10 Gew.-%, noch stärker bevorzugt 0,001-5 Gew.-% Solvolyseprodukt bezogen auf den Gesamtaustrag.

In einer bevorzugten Ausführungsform kann der Austrag einem an die Austrittsdüse angeschlossenen Siebrohr zugeführt werden. Im Siebrohr kann das restliche Solvolyseprodukt von nicht-solvolysierbarem Kunststoff und/oder Feststoff getrennt werden. Um die Trennung zu verbessern und/oder zu beschleunigen, kann das Siebrohr ggf. eine Innentemperatur von 100-350 °C aufweisen und mit Druck, insbesondere mit 1,2-80 MPa beaufschlagt werden.

Die vorliegende Erfindung stellt somit ein kontinuierliches Verfahren zum stofflichen Recyclen von solvolysierbaren Kunststoffen und insbesondere von Mischungen aus solvolysierbaren und nicht-solvolysierbaren Kunststoffen bereit. Dabei wird kontinuierlich das Solvolyseprodukt von den anderen Bestandteilen im Extrusionsverfahren, insbesondere von nicht-solvolysierbarem Kunststoff und/oder Feststoff, separiert.

Das Solvolyseprodukt kann entweder direkt zur Herstellung entsprechender solvolysierbarer Kunststoffe verwendet werden oder zuvor noch aufgereinigt werden. Bevorzugt wird das erhaltene Solvolyseprodukt nicht weiter solvolysiert. Der Austrag aus der Austragsdüse besteht aus nicht-solvolysierbaren Kunststoffen und ggf. Feststoff. Der Austrag aus dem Extruder kann beispielsweise herkömmlich granuliert werden. Der Austrag kann bei der Herstellung entsprechender nichtsolvolysierbarer Kunststoffe verwendet werden.

Überaschenderweise hat sich gezeigt, dass die Schneckenrotation, die Öffnung(en) im vorbestimmten Zylinderabschnitt kontinuierlich freisetzt, sodass das Solvolyseprodukt schnell und vollständig aus dem Verfahren abgeführt werden kann.

Es hat sich überraschenderweise auch gezeigt, dass der nicht-solvolysierbare Kunststoff im Extruder eine Phase bildet, die als Klärmittel wirkt, weil sich darin selektiv eventuell vorhandene Feststoffe anreichern, und als Composite mit dem nicht-solvolysierbaren Kunststoff über die Austrittsdüse ausgetragen werden können. Durch die Abtrennung des flüssigen, solvolysierbaren Kunststoffanteils (über die Öffnungen) erfolgt eine Anreicherung des nicht-solvolyierbaren Kunststoffes, wodurch die quantitative bzw. vollständige Agglomeration des nicht-solvolysierbaren Kunststoffes auch bei geringen Konzentrationen möglich wird.

Das erfindungsgemäße Verfahren eignet sich daher im besonderen Maße für das Recycling von Mischabfällen, wie z.B. von Kühlschränken und Polstermaterialien. Für die Herstellung von Kühlschränken wird üblicherweise ein Polystryrolhohlkörper mit Polyurethanhartschaum ausgespritzt. Die Komponenten des Kühlschranks können mittels herkömmlicher Methoden geschreddert werden und dem erfindungsgemäßen Verfahren zugeführt werden. Während das Polyurethan durch die Solvolysereaktion in das Solvolyseprodukt umgesetzt wird, wird das Polystyrol über die Austrittsdüse sortenrein ausgetragen. Das erfindungsgemäße Verfahren ermöglicht somit erstmalig ein stoffliches Recycling von Kühlmöbeln.

Gleiches gilt auch für Polstermöbel, wie z.B. Autositze, zu deren Herstellung ein Textilsubstrat, beispielsweise aus Polyolefin mit einem Polyurethanweichschaum hinterschäumt wird. Auch diese Komponenten können herkömmlich geschreddert werden und als Polymerabfall im erfindungsgemäßen Verfahren eingesetzt werden. Während die Polyurethankomponente zum flüssigen Solvolyseprodukt im Extruder abgebaut wird und dieses über die Öffnung(en) ausgetragen wird, wird das Textilsubstrat aus Polyolefin über die Austrittsdüse ausgetragen.

Die vorliegende Erfindung wird anhand eines nicht beschränkenden Beispiels erläutert:

### Beispiel

### Beispiel 1: (Vergleich)

30 kg Polyurethan (PUR)-Reststoff (post consumer Kühlschrank) verunreinigt mit 10% Polystyrol (PS) und 5% Metall, Dichtungsmaterial und sonstigen Verunreinigungen werden bei 200°C in einem Rührbehälter mit 30 kg Diethylenglykol (Glykolyse) umgesetzt und danach auf 100°C abgekühlt und filtriert. Um Anhaftungen im Rührbehälter zu vermeiden, werden die ungelösten Fremdstoffe über geeignete Rührtechniken dispergiert.

Als Endprodukt entsteht durch die Glykolyse des PUR ein flüssiges Polyol. PS und sonstige Fremdstoffe werden chemisch nicht abgebaut und verbleiben als Feststoff im Polyol. Das feststoffhaltige Polyol wird über einen 100 µm Kantenspaltfilter filtriert. Die Filtration des feststoffhaltigen Polyols ist aufwendig, selbst wenn man Restfeuchten von 150% bezogen auf den Feststoff in Kauf nimmt. Die thermoplastischen Verunreinigungen sind bei höheren Temperaturen weich und oft auch gequollen (Gel-Partikel), was eine vollständige Filtration unmöglich macht oder wesentlich erschwert.

Das Polyol ist deshalb typischerweise mit feinteiligen Feststoffen < 100µm verunreinigt, die die spätere Verarbeitung stören können (Verstopfungen/Abrieb in Mischköpfen) und zur Sedimentation neigen.

Zusammenfassend ist die Abtrennung hoher Fremdstoffanteile aus dem flüssigen Polyol technisch schwierig, ineffektiv und unwirtschaftlich und das Produkt/Polyol ist dennoch mit feinteiligen Feststoffen verunreinigt.

### Beispiel 2: (Vergleich)

30 kg PET-Reststoff verunreinigt mit 15 % Fremdstoffen (14% PE bzw. PVC und 1% Alu) werden bei 220°C mit Glykol in einem Rührbehälter umgesetzt und abgekühlt.

Nach der Glykolyse hat sich das PET zu einem flüssigen Polyol umgesetzt. Die thermoplastischen Verunreinigungen (PE bzw. PVC) werden nicht chemisch umgesetzt und verbleiben teilweise als problematischer Rückstand im Reaktor bzw. als stark polyolbehafteter und damit nicht recycelbarer Filtrationsrückstand in den Filtern.

Das Aluminium kann durch Filter abgetrennt werden und fällt neben den Thermoplast-Partikeln als stark polyolbehafteter Filtrationsrückstand an. Das Recyclingverfahren hat eine geringe Ausbeute (hohe Polyol-Verluste) und ist darüber hinaus äußerst aufwendig.

### Beispiel 3:

In einem Zweischnecken-Extruder ZE28 x 64D BluePower Fa. Krauss Maffei wurden kontinuierlich 10 kg/h vorzerkleinerte PUR-Reststoffe (PUR Pulver aus der Kühlschrankrecycling-Windsichtung) mit 10% PS (Polystyrol) und 5% sonstige Fremdstoffe (Metall, Dichtungen usw.) zudosiert. Über die Einlassöffnung (B) wurde Diethylenglykol über entsprechende Pumpen mit einer Förderleistung von 10 kg/h kontinuierlich zudosiert.

Durch Vorerhitzung, Friktion und Temperaturzufuhr wurde das Reaktionsgemisch im Extruder auf 280°C erhitzt und durch die Extruderschnecken weiter gefördert (Reaktionszone).

In der Reaktionszone wurde der PUR-Anteil vollständig zu einem flüssigen Polyol umgesetzt. Das flüssige Polyol trat durch Löcher im Zylindermantel (Filtersieb 100 µm) aus.

Der PS-Anteil und die Fremdstoffe wurden unter den Reaktionsbedingungen chemisch nicht angegriffen und bildeten eine plastische PS/Fremdstoff-Phase im flüssigen Polyol.

Die plastischen PS-Partikel agglomerierten im Extruder zu einem kompakten, polyolfreien, PS-Strang, der sonstige Feststoffe (Metall, Dichtungen usw.) einschließt und über die Austrittsdüse des Extruders austrat.

Durch die Agglomeration im Extruder sind Polyoleinschlüsse ausgeschlossen und das PS kann einem weiteren, wirtschaftlichen, PS-Recycling zugeführt werden. Die Restfeuchte (Polyolanhaftungen am Strang) war <1%.

Die Polyole waren klar und frei von Feststoffen.

### Beispiel 4:

10 kg/h PET mit Fremdstoffen (6% PE, 5% PVC und 1% Aluminium) aus der DSD-Sammlung wurden kontinuierlich im Extruder analog zu Beispiel 3 mit 10 kg/h zudosiert. Kurz danach wurde kontinuierlich Glykol mit 10 kg/h über die Einlassöffnung (B) zudosiert.

Durch Vorerhitzung, Friktion und Temperaturzufuhr wurde das Reaktionsgemisch im Extruder auf 280°C erhitzt und durch die Extruderschnecke weiter gefördert (Reaktionszone).

Das flüssige Polyol trat durch Löcher im Zylindermantel (Filtersieb 100 µm) aus.

PE, PVC und die Fremdstoffe wurden unter den Reaktionsbedingungen chemisch nicht angegriffen und bildeten eine plastische Komposit-Phase im flüssigen Polyol.

Das Agglomerat aus PE, PVC und Metall wurde über die Austrittsdüse des Extruders ausgetragen.

Durch die Agglomeration im Extruder sind Polyoleinschlüsse ausgeschlossen und das PE/PVC/Alu konnte ohne nennenswerte Polyolanhaftungen (<1%) abgetrennt und so einem weiteren, einfachen und wirtschaftlichem Recycling (Thermoplast-/Alu-Recycling) zugeführt werden.

### Beispiel 5:

Es wurde analog zu Beispiel 3 eine post consumer PUR Fraktion aus dem Kühlschrank-Recycling eingesetzt. Hier wurde eine PUR-Fraktion eingesetzt, die durch schlechtere Vortrennung (Windsichtung usw.) höhere PS-Anteile bzw. Thermoplastanteile enthält.

Durch Erhöhung des Thermoplast-Anteils wurde die Strang-Bildung gezielt gefördert, so dass auch bei höheren Thermoplastanteilen oder gezielt zugesetzten Thermoplasten eine effektive Trennung zwischen Thermoplast- und Polyol-Phase möglich ist.

### Beispiel 6:

Analog zu Beispiel 4 wurde ein PUR-Verpackungsschaum mit 10% PE (10 kg/h) mit 10kg/h Dipropylenglykol bei 280°C kontinuierlich im Extruder umgesetzt.

An der Austrittsdüse des Extruders war ein Siebrohr (Kantenspaltfilter-Element mit 100µm) angeschlossen. Die Restfeuchte des PE-Thermoplaststrangs konnte mit dem Siebrohr auf < 0,5% Polyol reduziert werden.

Die vorliegende Erfindung umfasst die folgenden Punkte:
1. Extruder umfassend
   (i) einen beheizbaren Hohlzylinder;
   (ii) mindestens eine Schnecke, welche drehbar im Hohlraum des beheizbaren Hohlzylinders angeordnet ist und sich im Wesentlichen über die gesamte Länge des beheizbaren Hohlzylinders erstreckt;
   (iii) ein Antriebsmittel für die Drehung der Schnecke an einem Ende des beheizbaren Hohlzylinders;
   (iv) eine Einlassöffnung (A) im Bereich des dem Antriebsmittel zugewandten Endes des beheizbaren Hohlzylinders;
   (v) eine Austrittsdüse an dem dem Antriebsmittel abgewandten Ende des beheizbaren Hohlzylinders;
   (vi) eine Einlassöffnung (B) angeordnet zwischen Einlassöffnung (A) und Austrittsdüse;
   (vii) ggf. eine Entgasungsöffnung angeordnet zwischen Einlassöffnung (B) und Austrittsdüse; und
   (viii) ggf. ein Siebrohr, das fluiddicht mit der Austrittsdüse verbunden ist,
   wobei der beheizbare Hohlzylinder in einem vorbestimmten Zylinderabschnitt angrenzend an die Austrittsdüse mit mindestens einer Öffnung, insbesondere mindestens einer Bohrung oder mindestens einem Spalt, versehen ist.
2. Extruder nach Punkt 1, welcher ein Doppelschneckenextruder, insbesondere mit parallel angeordneten Schnecken, ist.
3. Extruder nach Punkt 1 oder 2, wobei die mindestens eine Schnecke in verschiedene Abschnitte unterteilt ist.
4. Extruder nach Punkt 3, wobei sich die jeweiligen Abschnitte der Schnecke in ihrer Konfiguration, insbesondere Gewindesteigung, Anzahl der oder Anwesenheit von Knetelementen, Entgasungselementen und Verdichtungselementen unterscheiden.
5. Extruder nach einem der vorhergehenden Punkte, wobei sich die Einlassöffnung (A) in den Hohlraum des beheizbaren Hohlzylinders erstreckt und ggf. einen Befülltrichter umfasst.
6. Extruder nach einem der vorhergehenden Punkte, wobei sich die Einlassöffnung (B) in den Hohlraum des beheizbaren Hohlzylinders erstreckt und bevorzugt ausgelegt ist, um Flüssigkeiten einzuspeisen.
7. Extruder nach einem der vorhergehenden Punkte, wobei die mindestens eine Öffnung radial angeordnet ist.
8. Extruder nach einem der vorhergehenden Punkte, wobei die mindestens eine Öffnung zwischen Hohlzylindermantelfläche und Hohlraum des Hohlzylinders, insbesondere für Flüssigkeiten, durchgängig ist.
9. Extruder nach einem der vorhergehenden Punkte, wobei die eine Öffnung eine Querschnittsfläche im Bereich von 0,01-200 mm² aufweist.
10. Extruder nach einem der vorhergehenden Punkte, wobei die mindestens eine Öffnung eine Bohrung ist, insbesondere mit einem Durchmesser von 0,0005-10 mm.
11. Extruder nach einem der vorhergehenden Punkte, wobei der vorbestimmte Zylinderabschnitt etwa 1-60 % der Gesamtlänge des beheizbaren Hohlzylinders ausmacht.
12. Extruder nach einem der vorhergehenden Punkte, wobei die Öffnungen auf dem Zylinderabschnitt regelmäßig angeordnet sind.
13. Extruder nach einem der vorhergehenden Punkte, wobei das Siebrohr beheizbar ist, insbesondere in einem Bereich von 100-350°C.
14. Extruder nach einem der vorhergehenden Punkte, wobei das Siebrohr mit Druck, insbesondere 0-30 bar, beaufschlagbar ist.
15. Extruder nach einem der vorhergehenden Punkte, wobei das Siebrohr eine Wandstärke von 1-10 mm aufweist und/oder zu 10-80% perforiert ist bezogen auf die Gesamtaussenfläche des Siebrohrs.
16. Verfahren zur kontinuierlichen Solvolyse von Polymerabfällen in einem Extruder nach einem der Punkte 1-15, umfassend die Schritte
   (a) Einbringen von Polymerabfall in den Hohlraum des beheizbaren Hohlzylinders über Einlassöffnung (A),
   (b) Einbringen des Spaltreagenz in den Hohlraum des beheizbaren Hohlzylinders über Einlassöffnung (A) und/oder (B),
   (c) Extrudieren der in den Hohlraum des beheizbaren Hohlzylinders eingebrachten Komponenten, ggf. bei erhöhter Temperatur und/oder erhöhtem Druck.
17. Verfahren nach Punkt 16, wobei die Solvolyse eine Glykolyse, Hydrolyse, Alkoholyse, Aminolyse, Acidolyse oder Kombination davon, bevorzugt Glykolyse, ist.
18. Verfahren nach einem der Punkte 16-17, wobei der Polymerabfall mindestens einen solvolysierbaren Kunststoff, insbesondere ein Estergruppen-, Amidgruppen- und/oder Urethangruppen-haltiges Polymer, bevorzugt Polyurethan, Polyester, Polyetherester, Polyamid, Polycarbonat, Polyisocyanurat oder einer Mischung davon, enthält.
19. Verfahren nach einem der Punkte 16-18, wobei der Polymerabfall ferner mindestens einen nicht-solvolysierbaren Kunststoff, insbesondere einen nicht-solvolysierbaren Thermoplasten, noch stärker bevorzugt mindestens ein Polyolefin, insbesondere Polystyrol, enthält.
20. Verfahren nach einem der Punkte 16-19, wobei der Polymerabfall mindestens einen solvolysierbaren Kunststoff, insbesondere Polyurethan, und mindestens einen nicht-solvolysierbaren Kunststoff, insbesondere Polyolefin, bevorzugt Polystyrol, enthält.
21. Verfahren nach einem der Punkte 16-20, wobei der Polymerabfall 1-99,9 Gew.-% solvolysierbaren Kunststoff und 0,1-99 Gew.-% Polyolefin enthält.
22. Verfahren nach einem der Punkte 16-21, wobei der Polymerabfall ferner mindestens einen Feststoff, bevorzugt ausgewählt aus Aluminium, Papier und anorganischem Füllstoff enthält.
23. Verfahren nach einem der Punkte 16-22, wobei das Spaltreagenz, bevorzugt Glykol, Alkohol, und/oder Wasser, über die Einlassöffnung (A) und/oder (B) in den Hohlraum des Hohlzylinders eingebracht wird.
24. Verfahren nach einem der Punkte 16-23, wobei das Spaltreagenz ferner mindestens einen Hilfsstoff, beispielsweise einen Katalysator, enthält.
25. Verfahren nach einem der Punkte 16-24, wobei der beheizbare Hohlzylinder unterschiedliche Temperaturabschnitte aufweist.
26. Verfahren nach einem der Punkte 16-25, wobei der beheizbare Hohlzylinder in unterschiedliche Druckabschnitte untergliedert ist.
27. Verfahren nach einem der Punkte 16-26, wobei der beheizbare Hohlzylinder in unterschiedliche Knetabschnitte untergliedert ist, in denen bevorzugt eine Temperatur von 100-350°C, bevorzugt 220-290°C, herrscht.
28. Verfahren nach einem der Punkte 16-27, wobei die Verweildauer in den Knetabschnitten auf 1-180 Minuten eingestellt wird.
29. Verfahren nach einem der Punkte 16-28, wobei der Druck im Bereich des vorbestimmten Zylinderabschnitts im Bereich von 1-80 MPa, bevorzugt 1,2-80 MPa, liegt.
30. Verfahren nach einem der Punkte 16-29, wobei das Solvolyseprodukt über die mindestens eine Öffnung ausgetragen wird.
31. Verfahren nach einem der Punkte 16-30, wobei der nicht-solvolysierbare Kunststoff und/oder Feststoff über die Austrittsdüse ausgetragen wird.
32. Verfahren nach einem der Punkte 16-31, wobei der Austrag über die Austrittsdüse weniger als 10 Gew.-%, stärker bevorzugt 0,001-5 Gew.-% Solvolyseprodukt bezogen auf den Gesamtaustrag enthält.
33. Verfahren nach Punkt 32, wobei das Solvolyseprodukt nach Austrag über die Austrittsdüse im Siebrohr von Fremdstoff und/oder Feststoff weiter separiert wird.

## Patentansprüche

1. Extruder umfassend
(i) einen beheizbaren Hohlzylinder;
(ii) mindestens eine Schnecke, welche drehbar im Hohlraum des beheizbaren Hohlzylinders angeordnet ist und sich im Wesentlichen über die gesamte Länge des beheizbaren Hohlzylinders erstreckt;
(iii) ein Antriebsmittel für die Drehung der Schnecke an einem Ende des beheizbaren Hohlzylinders;
(iv) eine Einlassöffnung (A) im Bereich des dem Antriebsmittel zugewandten Endes des beheizbaren Hohlzylinders;
(v) eine Austrittsdüse an dem dem Antriebsmittel abgewandten Ende des beheizbaren Hohlzylinders;
(vi) eine Einlassöffnung (B) angeordnet zwischen Einlassöffnung (A) und Austrittsdüse;
(vii) ggf. eine Entgasungsöffnung angeordnet zwischen Einlassöffnung (B) und Austrittsdüse; und
(viii) ggf. ein Siebrohr, das fluiddicht mit der Austrittsdüse verbunden ist,
wobei der beheizbare Hohlzylinder in einem vorbestimmten Zylinderabschnitt angrenzend an die Austrittsdüse mit mindestens einer Öffnung, insbesondere mindestens einer Bohrung oder mindestens einem Spalt, versehen ist.

2. Extruder nach Anspruch 1, wobei die mindestens eine Schnecke in verschiedene Abschnitte unterteilt ist,
und/oder
wobei sich die jeweiligen Abschnitte der Schnecke in ihrer Konfiguration, insbesondere Gewindesteigung, Anzahl der oder Anwesenheit von Knetelementen, Entgasungselementen und Verdichtungselementen unterscheiden.

3. Extruder nach einem der vorhergehenden Ansprüche, wobei sich die Einlassöffnung (A) in den Hohlraum des beheizbaren Hohlzylinders erstreckt und ggf. einen Befülltrichter umfasst,
und/oder
wobei sich die Einlassöffnung (B) in den Hohlraum des beheizbaren Hohlzylinders erstreckt und bevorzugt ausgelegt ist, um Flüssigkeiten einzuspeisen.

4. Extruder nach einem der vorhergehenden Ansprüche, wobei die mindestens eine Öffnung radial angeordnet ist
und/oder
wobei die mindestens eine Öffnung zwischen Hohlzylindermantelfläche und Hohlraum des Hohlzylinders, insbesondere für Flüssigkeiten, durchgängig ist,
und/oder
wobei die eine Öffnung eine Querschnittsfläche im Bereich von 0,01-200 mm² aufweist,
und/oder
wobei die mindestens eine Öffnung eine Bohrung ist, insbesondere mit einem Durchmesser von 0,0005-10 mm.

5. Extruder nach einem der vorhergehenden Ansprüche, wobei der vorbestimmte Zylinderabschnitt etwa 1-60 % der Gesamtlänge des beheizbaren Hohlzylinders ausmacht,
und/oder
wobei die Öffnungen auf dem Zylinderabschnitt regelmäßig angeordnet sind.

6. Extruder nach einem der vorhergehenden Ansprüche, wobei das Siebrohr beheizbar ist, insbesondere in einem Bereich von 100-350°C, und/oder
wobei das Siebrohr mit Druck, insbesondere 0-30 bar, beaufschlagbar ist,
und/oder
wobei das Siebrohr eine Wandstärke von 1-10 mm aufweist und/oder zu 10-80% perforiert ist bezogen auf die Gesamtaussenfläche des Siebrohrs.

7. Verfahren zur kontinuierlichen Solvolyse von Polymerabfällen in einem Extruder nach einem der Ansprüche 1-6, umfassend die Schritte
(a) Einbringen von Polymerabfall in den Hohlraum des beheizbaren Hohlzylinders über Einlassöffnung (A),
(b) Einbringen des Spaltreagenz in den Hohlraum des beheizbaren Hohlzylinders über Einlassöffnung (A) und/oder (B),
(c) Extrudieren der in den Hohlraum des beheizbaren Hohlzylinders eingebrachten Komponenten, ggf. bei erhöhter Temperatur und/oder erhöhtem Druck.

8. Verfahren nach Anspruch 7, wobei die Solvolyse eine Glykolyse, Hydrolyse, Alkoholyse, Aminolyse, Acidolyse oder Kombination davon, bevorzugt Glykolyse, ist.

9. Verfahren nach einem der Ansprüche 7-8, wobei der Polymerabfall mindestens einen solvolysierbaren Kunststoff, insbesondere ein Estergruppen-, Amidgruppen- und/oder Urethangruppen-haltiges Polymer, bevorzugt Polyurethan, Polyester, Polyetherester, Polyamid, Polycarbonat, Polyisocyanurat oder einer Mischung davon, enthält, und/oder
wobei der Polymerabfall ferner mindestens einen nicht-solvolysierbaren Kunststoff, insbesondere einen nicht-solvolysierbaren Thermoplasten, noch stärker bevorzugt mindestens ein Polyolefin, insbesondere Polystyrol, enthält,
und/oder
wobei der Polymerabfall mindestens einen solvolysierbaren Kunststoff, insbesondere Polyurethan, und mindestens einen nicht-solvolysierbaren Kunststoff, insbesondere Polyolefin, bevorzugt Polystyrol, enthält,
und/oder
wobei der Polymerabfall 1-99,9 Gew.-% solvolysierbaren Kunststoff und 0,1-99 Gew.-% Polyolefin enthält,
und/oder
wobei der Polymerabfall ferner mindestens einen Feststoff, bevorzugt ausgewählt aus Aluminium, Papier und anorganischem Füllstoff, enthält.

10. Verfahren nach einem der Ansprüche 7-9, wobei das Spaltreagenz, bevorzugt Glykol, Alkohol, und/oder Wasser, über die Einlassöffnung (A) und/oder (B) in den Hohlraum des Hohlzylinders eingebracht wird, und/oder.
wobei das Spaltreagenz ferner mindestens einen Hilfsstoff, beispielsweise einen Katalysator enthält.

11. Verfahren nach einem der Ansprüche 7-10, wobei der beheizbare Hohlzylinder unterschiedliche Temperaturabschnitte aufweist, und/oder
wobei der beheizbare Hohlzylinder in unterschiedliche Druckabschnitte untergliedert ist,
und/oder
wobei der beheizbare Hohlzylinder in unterschiedliche Knetabschnitte untergliedert ist, in denen bevorzugt eine Temperatur von 100-350°C, bevorzugt 220-290°C, herrscht,
und/oder
wobei die Verweildauer in den Knetabschnitten auf 1-180 Minuten eingestellt wird.

12. Verfahren nach einem der Ansprüche 7-11, wobei der Druck im Bereich des vorbestimmten Zylinderabschnitts im Bereich von 1-80 MPa, bevorzugt 1,2-80 MPa, liegt.

13. Verfahren nach einem der Ansprüche 7-12, wobei das Solvolyseprodukt über die mindestens eine Öffnung ausgetragen wird.

14. Verfahren nach einem der Ansprüche 7-13, wobei der nicht-solvolysierbare Kunststoff und/oder Feststoff über die Austrittsdüse ausgetragen wird.

15. Verfahren nach einem der Ansprüche 7-14, wobei der Austrag über die Austrittsdüse weniger als 10 Gew.-%, stärker bevorzugt 0,001-5 Gew.-% Solvolyseprodukt bezogen auf den Gesamtaustrag enthält, und/oder
wobei das Solvolyseprodukt nach Austrag über die Austrittsdüse im Siebrohr von Fremdstoff und/oder Feststoff weiter separiert wird.
